# EUROPEAN PATENT SPECIFICATION

(11) **EP 3 530 696 B1**
(45) Date of publication and mention of the grant of the patent: **21.06.2023**
(21) Application number: 17861734.6
(22) Date of filing: 17.10.2017
(51) Int. Cl.: C08L 69/00, B32B 27/00, B32B 27/36, B42D 25/305, B42D 25/41, B42D 25/45, C08K 3/04, C08K 3/22, C08L 67/04

(54) **RESIN COMPOSITION, RESIN SHEET FOR CARD CONTAINING RESIN COMPOSITION, AND MULTILAYER SHEET**
HARZZUSAMMENSETZUNG, HARZFOLIE FÜR KARTE MIT DER HARZZUSAMMENSETZUNG UND MEHRSCHICHTIGE FOLIE
COMPOSITION DE RÉSINE AINSI QUE FEUILLE DE RÉSINE POUR CARTE CONTENANT CELLE-CI, ET FEUILLE MULTICOUCHE

(30) Priority: 18.10.2016 JP 2016204712
(43) Date of publication of application: 28.08.2019
(60) Divisional application: 20200248.1
(73) Proprietor: Mitsubishi Gas Chemical Company, Inc., Tokyo 100-8324 (JP); MGC Filsheet Co., Ltd., Saitama 359-1164 (JP)
(72) Inventor: TAKEDA, Masahide, Tokyo 100-8324 (JP); SUZUKI, Kentaro, Kanagawa 254-0016 (JP); ZOUTA, Keiichi, Fukushima 961-0005 (JP); ASANO, Junya, Saitama 359-1164 (JP)
(74) Representative: Hoffmann Eitle
(86) International application number: PCT/JP2017/037580
(87) International publication number: WO 2018/074480

(56) References cited:
- EP-A1- 2 725 063
- JP-A- H10 287 804
- JP-A- H10 287 804
- JP-A- 2002 138 193
- JP-A- 2007 131 679
- JP-A- 2007 326 938
- JP-A- 2007 326 938
- JP-A- 2010 531 365
- JP-A- 2011 219 763
- JP-A- 2015 083 621

## Description

### TECHNICAL FIELD

The present invention relates to a resin composition that has high durability and heat resistance and can be easily processed, a resin sheet for a card produced by using the same, and a multilayer sheet.

### BACKGROUND ART

Resin films are conventionally used for ID cards, e-passports, contactless IC cards, etc. It is known that as materials of such resin films, for example, polyvinyl chloride (PVC), polyethylene terephthalate-based PET-G, etc. are used.

It is also known that polyester resin compositions are used as resin compositions for various cards (see Patent Document 1). Patent Document 1 discloses a polyester resin composition which contains a polyester resin mainly composed of PET and an aromatic polycarbonate resin.
JP H10 287804; JP 2007 326938 A; and EP 2 725 063 A1 disclose polycarbonate-based resins.

### PRIOR ART DOCUMENTS

### PATENT DOCUMENTS

Patent Document 1: Japanese Laid-Open Patent Publication No. 2002-97361

### DISCLOSURE OF THE INVENTION

### PROBLEMS TO BE SOLVED BY THE INVENTION

When using PVC, PET-G or the like as a resin composition for cards, the problem of mechanical strength of cards may arise since durability and heat resistance of these resins are not necessarily sufficient.

Patent Document 1 describes that the above-described polyester resin composition is excellent in heat resistance, impact resistance, etc. However, the polyester resin composition has poor transparency and the resolution of printed portions is reduced.

### MEANS FOR SOLVING THE PROBLEMS

The present inventors diligently made researches in order to solve the above-described problems and found that a predetermined resin composition containing a polycarbonate has high durability and heat resistance and maintains transparency while having excellent easiness of processing, and thus the present invention was achieved.

Specifically, the present invention relates to a resin composition, a resin sheet for a card formed by using a polycarbonate resin composition and a multilayer sheet described below.
(1) A resin composition, which contains: 2% by mass or more but less than 9% by
   mass of an aliphatic polyester compound; and a polycarbonate resin,
   wherein the resin composition has laser markability,
   the resin composition further contains a laser color former comprising at least carbon black, and
   the content of the carbon black is 1 to 100 mass ppm (0.0001 to 0.01% by mass) based on the mass of the whole resin composition.
(2) The resin composition according to item (1), which has a glass transition temperature of 100 to 135°C.
(3) The resin composition according to any one of items (1) to (2), wherein the aliphatic polyester compound comprises at least a lactone compound as a constituent monomer.
(4) The resin composition according to item (3), wherein the lactone compound comprises ε-polycaprolactone.
(5) The resin composition according to item (4), wherein the lactone compound comprises polycaprolactone whose main constituent monomer is ε-caprolactone.
(6) The resin composition according to any one of items (1) to (5), which contains the aliphatic polyester compound in an amount of 3% by mass or more but 5% by mass or less based on the mass of the whole resin composition.
(7) The resin composition according to any one of items (1) to (6), which contains the polycarbonate resin in an amount of 90% by mass or more based on the mass of the whole resin composition.
(8) The resin composition according to any one of items (1) to (7), which further contains a white pigment in an amount of 10 to 30% by mass based on the mass of the whole resin composition.
(9) The resin composition according to item (1), wherein the laser color former further comprises at least particles of a metal oxide.
(10) The resin composition according to item (9), wherein the metal oxide is represented by general formula (I):

   Bi₍₁₋ₓ₎MₓO_{y} ... (I)

   wherein: M is at least one metal selected from gadolinium and neodymium; x is a value satisfying 0.001<x<0.5; and y is a value satisfying 1<y<2.5.
(11) The resin composition according to any one of items (1) to (10), which contains the laser color former in an amount of 0.0001 to 0.2% by mass based on the mass of the resin composition.
(12) A resin sheet for a card, which has a layer containing the resin composition according to any one of items (1) to (11).
(13) The resin sheet for a card according to item (12), which has an embedded antenna chip.
(14) The resin sheet for a card according to item (12) or (13), which is for a laser marking card.
(15) A multilayer sheet having two or more laminated resin sheets, wherein at least one layer contains the resin composition according to any one of items (1) to (11).
(16) The multilayer sheet according to item (15), which further has a resin sheet containing one material selected from the group consisting of PET-G, polycarbonate, PCT-G, PCT and a mixture of at least two of them.

### ADVANTAGEOUS EFFECT OF THE INVENTION

The resin composition of the present invention contains an aliphatic polyester compound and a polycarbonate resin, and when it is processed into a sheet shape, it is not easily broken. It has excellent impact resistance, and has high durability particularly with respect to bending fatigue. Moreover, the resin composition of the present invention is also excellent in heat resistance and transparency, and is easily processed by heating. The resin composition of the present invention that has the above-described excellent characteristics is suitably used, in particular, as a material for a resin sheet for cards and a multilayer sheet, and for example, it is suitable for the production of an ID card, an e-passport, a contactless IC card, etc.

Further, the resin composition of the present invention is also excellent in adhesiveness to a film formed with another resin, in particular, a film formed with a polyester resin as the main component such as a PET-G film, and therefore is also suitable for the production of a laminate including such a film.

### BRIEF DESCRIPTION OF THE DRAWINGS

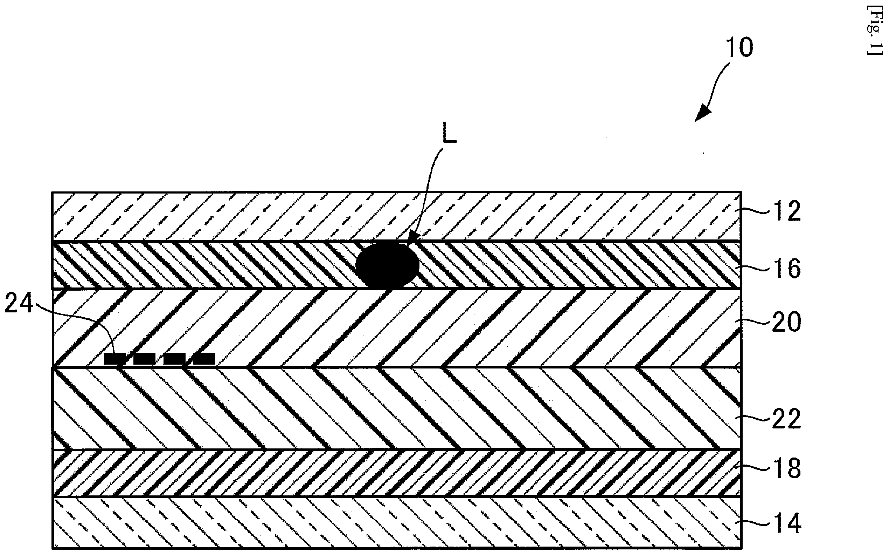

FIG. 1 is a cross sectional view showing a specific example of the multilayer sheet (ID card).

### BEST MODE FOR CARRYING OUT THE INVENTION

Hereinafter, the present invention will be described in detail. Note that the present invention is not limited to the below-described embodiments, and can be arbitrarily changed and then carried out within a range in which the effects of the present invention are exerted.

### [Resin composition]

The resin composition of the present invention contains: 2% by mass or more but less than 9% by mass of an aliphatic polyester compound; and a polycarbonate resin, wherein the resin composition has laser markability,
the resin composition further contains a laser color former comprising at least carbon black, and
the content of the carbon black is 1 to 100 mass ppm (0.0001 to 0.01% by mass) based on the mass of the whole resin composition.
The type, etc. of each of the aliphatic polyester compound and the polycarbonate resin are as described later, and the content of the aliphatic polyester compound in the resin composition is more preferably 3% by mass or more but less than 9% by mass, even more preferably 3% by mass or more but 7% by mass or less, and particularly preferably 3% by mass or more but 5% by mass or less.

Thus, the resin composition of the present invention contains, as the main component, the polycarbonate resin that is excellent in durability and heat resistance and has high transparency, and therefore has these excellent characteristics. Moreover, the resin composition of the present invention contains a predetermined amount of the aliphatic polyester compound which is described in detail later, and for this reason, the resin composition is also excellent in easiness of processing.

The glass transition temperature of the resin composition of the present invention is preferably 100°C to 135°C, more preferably 105°C to 130°C, and even more preferably 110°C to 128°C. In particular, from the viewpoint of easiness of processing of the resin composition, the glass transition temperature is 128°C or lower, and preferably 120°C or lower.

### <Aliphatic polyester compound>

The aliphatic polyester compound contained in the resin composition of the present invention comprises a lactone compound as a constituent monomer. The aliphatic polyester compound may comprise, as the constituent monomer, a plurality of types of the above-described compounds, or may comprise only one type of the compound.

Among the above-described compounds, the aliphatic polyester compound preferably comprises a lactone compound as a monomer. In this regard, in all the monomers constituting the aliphatic polyester compound, the lactone compound is used in an amount of preferably 70 mol% or more, and more preferably 90 mol% or more.

Further, the lactone compound as the monomer of the aliphatic polyester compound includes ε-caprolactone, β-propiolactone and δ-valerolactone. The monomer of the aliphatic polyester compound may comprise a plurality of types of these lactone compounds, or only one type may be used.

Further, among the above-described lactone compounds, ε-caprolactone is preferably used as the monomer of the aliphatic polyester compound. In this regard, in the lactone compounds, ε-caprolactone is used in an amount of preferably 70 mol% or more, and more preferably 90 mol% or more.

Thus, the aliphatic polyester compound preferably comprises a polycaprolactone whose main constituent monomer is ε-caprolactone, and more preferably, as the aliphatic polyester compound, a polycaprolactone whose monomer is only ε-caprolactone is used. Note that the main constituent monomer means that it accounts for 50 mol% or more of the total of constituent monomers.

The weight-average molecular weight of the aliphatic polyester compound is preferably 10,000 to 90,000. The weight-average molecular weight of the aliphatic polyester compound is more preferably 10,000 to 60,000, and particularly preferably 10,000 to less than 40,000.

### <Polycarbonate resin>

The polycarbonate resin contained in the resin composition of the present invention is not particularly limited as long as it contains a carbonate bond in the main chain of the molecule, i.e., it contains a -[O-R-OCO]- unit (R includes an aliphatic group, an aromatic group, or both of the aliphatic group and the aromatic group, and further has a linear structure or a branched structure), but the below-described polycarbonate is particularly preferably used.

That is a polycarbonate having a bisphenol A skeleton.

The weight-average molecular weight of the polycarbonate resin is preferably 20,000 to 60,000, more preferably 23,000 to 55,000, and even more preferably 25,000 to 50,000.

Further, the glass transition temperature of the polycarbonate resin is preferably 120 to 160 (°C), and more preferably 130 to 155 (°C).

The polycarbonate resin having a weight-average molecular weight or glass transition temperature within the above-described ranges contributes to realization of high heat resistance and impact resistance of the resin composition.

Further, the resin composition preferably contains the polycarbonate resin in an amount of 90% by mass or more based on the mass of the whole resin composition. The resin composition contains the polycarbonate resin in an amount of more preferably 93% by mass or more, and particularly preferably 95% by mass or more of the aliphatic polyester compound based on the mass of the whole resin composition.

### <White pigment>

The resin composition may further contain a white pigment. The resin composition containing the white pigment is suitably used as a material for a white sheet, for example, a white sheet for forming a core layer including an antenna of an ID card or the like. As the white pigment, titanium oxide, talc, kaolin, clay, mica or the like is used, and titanium oxide is preferably used.

The content of the white pigment is preferably 10 to 30% by mass, more preferably 13 to 25% by mass, and even more preferably 15 to 20% by mass based on the mass of the whole resin composition.

### <Laser color former>

The resin composition contains a laser color former comprising at least carbon black. The resin composition containing the laser color former is suitably used, for example, as a material for a laser marking sheet (laser marking layer) which enables printing by means of marking treatment for cards requiring prevention of falsification particularly. As the laser color former, antimony-doped tin oxide, a bismuth oxide-based color former or the like may be used in addition to carbon black.

Further, as a metal oxide-based laser color former, a bismuth oxide-based color former is preferred, and more preferred is a bismuth oxide-based color former which contains, as a metal component, neodymium or gadolinium in addition to bismuth.

For example, as the metal oxide that is the laser color former, those represented by formula (I) below are preferred:

Bi₍₁₋ₓ₎MₓO_{y} ... (I)

(In formula (I): M is at least one metal selected from gadolinium and neodymium; x is a value satisfying 0.001<x<0.5, and preferably a value satisfying 0.01<x<0.3; and y is a value satisfying 1<y<2.5, and preferably a value satisfying 1.5<y<2.1.)

The content of the laser color former is preferably 0.0001 to 0.2% by mass, more preferably 0.0005 to 0.15% by mass, and even more preferably 0.001 to 0.1% by mass based on the mass of the whole resin composition.

The content of carbon black is 1 to 100 mass ppm (0.0001 to 0.01% by mass), and preferably less than 40 mass ppm, for example, 5 to 35 mass ppm based on the mass of the whole resin composition. Further, when using the metal oxide-based particle as the laser color former, the content of the laser color former is, for example, 50 to 5000 mass ppm (0.005 to 0.5% by mass), preferably 80 to 3000 mass ppm, and more preferably 100 to 2000 mass ppm based on the mass of the whole resin composition. Regarding the laser color former, use of a laser color former having characteristics in which a light of 1064 nm that is a wavelength of laser is not easily transmitted, and in addition, a light having a wavelength of about 500 nm is not easily transmitted specifically provides marvelous effects to laser marking performance. For example, the above-described laser color former can realize the effect of enabling clear printing even when just a slight amount of the laser color former is contained in the resin composition. Examples of the laser color former that realizes the effect include the above-described carbon black and those containing bismuth oxide.

### <Additives of resin composition>

The resin composition may contain the below-described additives in addition to the above-described components. Specifically, they are at least one additive selected from the group consisting of a thermal stabilizer, an antioxidant, a flame retardant, a flame retardant auxiliary agent, an ultraviolet absorber, a mold release agent and a coloring agent, etc.

Moreover, an antistatic agent, a fluorescent brightener, an antifog additive, a flowability improving agent, a plasticizer, a dispersant, an antimicrobial agent, etc. may also be added as long as desired physical properties are not significantly impaired.

However, in the case of an organophosphorus compound such as a phosphazene flame retardant, when an excess amount thereof is added to the resin composition, durability of a sheet formed by using the resin composition may be reduced. For this reason, it is preferred that in the resin composition, the content of the organophosphorus compound is, for example, less than 2000 mass ppm, and the content of phosphorus is, for example, less than 100 mass ppm.

Further, when a material containing an organic sulfonic acid phosphonium salt such as an alkylbenzene sulfonic acid phosphonium salt is added to the resin composition as the antistatic agent, durability after card forming may be significantly reduced due to its low molecular weight. Accordingly, there is a case where it is preferred to avoid the addition of an additive which may adversely affect performance of a resin sheet for a card.

Moreover, also in the case of adding glass flakes or the like or a liquid additive such as a phenyl group-containing silicone oil to the resin composition, the problem of reduction in durability after card forming may arise. In particular, when glass flakes are added, the problem of reduction in outer appearance (transparency) of the resin composition may also arise. Accordingly, there is a case where it is preferred to also avoid use of these additives.

### [Resin sheet for card]

Since the resin composition of the present invention is excellent in heat resistance and durability and can be easily processed as described above, it is suitably used as a material for a resin sheet for a card. Specifically, by using the resin composition of the present invention, a sheet for a card, for example, an antenna chip-embedded sheet or a laser marking sheet can be produced.

In the process of producing a sheet using the resin composition of the present invention, as a method for processing the resin composition to form a layer shape (sheet shape), a conventional technique can be employed. Examples thereof include methods using extrusion molding or cast molding.

For example, in a method using extrusion molding, the resin composition of the present invention in the form of pellet, flake or powder is melted and kneaded by an extruder and then extruded from a T-die or the like, and a sheet in a semi-melted state obtained is cooled and solidified while being compressed by rolls, thereby forming a sheet.

### [Multilayer sheet]

The multilayer sheet of the present invention has two or more laminated thermoplastic resin sheets, and at least one layer thereof contains the resin composition of the present invention. More specifically, a card that is a multilayer sheet (laminate) can be produced by laminating a plurality of sheets formed by using the resin composition of the present invention, for example, the above-described sheets for a card.

In a preferred embodiment of the multilayer sheet of the present invention, for example, at least one of thermoplastic resin sheets (resin sheets) contains one material selected from the group consisting of PET-G, polycarbonate, PCT-G, PCT and a mixture of at least two of them (alloy). Specifically, preferred specific examples of the thermoplastic resin sheets (resin sheets) include a PET-G sheet, a polycarbonate (PC) resin sheet, a PCT-G sheet, a PCT sheet and a sheet mainly composed of an alloy of any two of these resins. In particular, as the above-described alloy, an alloy of PC resin and PET-G resin is preferred.

Further, a sheet formed by using the resin composition of the present invention containing polycarbonate, such as the above-described antenna chip-embedded sheet and laser marking sheet, is not only excellent in adhesiveness to other polycarbonate resin sheets to be laminated, but also excellent in adhesiveness to the above-described PET-G sheet and sheet of the alloy of PC resin and PET-G resin.

As the thermoplastic resin sheets (resin sheets) constituting the multilayer sheet, a polycarbonate/polyester sheet (sheet of resin containing both a polycarbonate and a polyester) may also be used.

The PET-G sheet is a sheet formed with a polyethylene terephthalate-based PET-G resin (PETG resin), i.e., a polyester containing a dicarboxylic acid unit mainly composed of a terephthalic acid unit, an ethylene glycol unit and a glycol unit mainly composed of a cyclohexanedimethanol unit (1,4-cyclohexanedimethanol unit). For example, the terephthalic acid unit accounts for 50% or more of all the dicarboxylic acid units on a molar basis, and ethylene glycol accounts for 50% or more of all the glycol units (the total of the ethylene glycol unit and the cyclohexanedimethanol unit) on a molar basis.

Further, as a material for the thermoplastic resin sheets, other polyethylene terephthalate-based resins such as PCT-G resin (PCTG resin) and PCT resin may also be used.

The PCT-G resin is also a polyester containing a dicarboxylic acid unit mainly composed of a terephthalic acid unit, an ethylene glycol unit and a glycol unit mainly composed of a cyclohexanedimethanol unit (1,4-cyclohexanedimethanol unit), but differs from the PET-G resin on the point that the cyclohexanedimethanol unit accounts for 50% or more of all the glycol units (the total of the ethylene glycol unit and the cyclohexanedimethanol unit) on a molar basis.

Further, the PCT resin (polycyclohexylene dimethylene terephthalate resin) is a polyester containing a dicarboxylic acid unit mainly composed of a terephthalic acid unit and a glycol unit mainly composed of a cyclohexanedimethanol unit (1,4-cyclohexanedimethanol unit), and does not contain any ethylene glycol unit.

The sheets formed by using the above-described polyethylene terephthalate-based resins, i.e., the PET-G sheet, the PCT-G sheet and the PCT sheet are excellent in adhesiveness to (compatibility with) the polycarbonate resin sheet and suitably used for a laminate using the polycarbonate resin sheet.

The polycarbonate/polyester sheet is a sheet containing a polymer alloy (mixture) of a polycarbonate and a polyester. As the polycarbonate, the same material as that for the polycarbonate resin contained in the resin composition of the present invention can be used. As the polyester, the above-described aliphatic polyester compound, polyethylene terephthalate-based PETG resin, PCTG resin, PCT resin, etc. can be used. Specifically, as a material of the thermoplastic resin sheet included in the multilayer sheet, a polymer alloy containing at least two of the above-described polycarbonate resin, PETG resin, PCTG resin, PCT resin and aliphatic polyester may be used.

Specific examples of the multilayer sheet include an ID card 10 shown in Figure 1. The ID card 10 is a laminate comprising a first surface layer 12, a second surface layer 14, a first laser marking layer 16, a second laser marking layer 18, a first core layer 20 and a second core layer 22.

The first surface layer 12 and the second surface layer 14 are colorless and transparent, and on the first laser marking layer 16 and the second laser marking layer 18, it is possible to provide printing by means of irradiation of a laser light L. The first core layer 20 and the second core layer 22 are white because the white pigment is contained therein, and in the first core layer 20, an antenna chip 24 is embedded. The information of an IC chip (not shown) is overwritten in response to an electromagnetic wave from outside received by the antenna chip 24.

The resin composition of the present invention can be used in each of these layers. In particular, by forming the first surface layer 12 and the second surface layer 14 with use of the resin composition of the present invention, the ID card 10 whose surface is excellent in durability and heat resistance can be produced.

Moreover, by using the resin composition of the present invention which contains the laser color former, the first laser marking layer 16 and the second laser marking layer 18 which are excellent in laser markability can be formed.

### EXAMPLES

Hereinafter, the present invention will be described in more detail by way of examples. However, the present invention is not limited to the below-described examples, and can be arbitrarily changed and then carried out without departing from the gist of the present invention.

### <Measurement of glass transition temperature>

The glass transition temperature (Tg) of the resin was measured using a differential scanning calorimeter EXSTAR DSC 7020 (DSC) manufactured by Hitachi High-Tech Science Corporation. In the measurement, the temperature was increased to a temperature at which the resin component was melted under nitrogen atmosphere (270°C) at a rate of 15°C/min, decreased to 30°C at a rate of 20°C/min, and then increased again at a rate of 15°C/min (2nd run). The glass transition temperature was obtained from the obtained DSC curve according to the starting point method.

### <Adhesiveness to PETG film>

The adhesiveness of the resin composition to the PETG film in each of Examples and Comparative Examples was evaluated using a sample prepared as described below.

### Preparation of sample

A 50 µm film was prepared using the resin composition to be measured, and it was overlaid on a 100 µm film similarly prepared using PETG (S2008: manufactured by SK Chemicals). The two-layer film to be measured was sandwiched between two laminated plates, in each of which a 0.5 mm SUS plate, a 1 mm silicone rubber sheet, a 100 µm SUS plate and a 0.78 mm Teflon (registered trademark) sheet were layered. Specifically, the film to be measured was sandwiched between the above-described two laminated plates so that the Teflon sheet of one of the laminated plates contacted with the sample film side of the film to be measured and the Teflon sheet of the other laminated plate contacted with the PETG film side of the film to be measured. Further, while the film to be measured was sandwiched between the two laminated plates, it was further sandwiched between a pair of pressing plates of a pressing machine from the side of the 0.5 mm SUS plate positioned at the outermost position of each of the two laminated plates, and using a pneumatic heating press (IMC-1839 type: manufactured by Imoto Machinery Co., Ltd.), it was pressed at 120°C and an air pressure of 0.2 MPa for 60 seconds, thereby preparing a laminate.

### <Evaluation of adhesiveness>

The obtained laminate was attached to an adhesive tape peeling test apparatus by Autograph (AGS-X: manufactured by Shimadzu Corporation), and a peeling test, wherein the 50 µm film of the resin composition to be measured was peeled from the 100 µm PETG film (90° peeling test at a peeling rate of 152.4 mm/min), was conducted. The adhesiveness was evaluated as follows:
It was impossible to peel the film: very good
The peel force was 20 N/50 mm or more: good
The peel force was less than 20 N/50 mm: poor

### <Durability>

The durability of the resin composition of each of Examples and Comparative Examples was evaluated as described below. A card having a thickness of 0.78 mm was prepared using the target resin composition. A card bending test was conducted using an IC card bending/torsion test machine (manufactured by Toyo Seiki Seisaku-sho, Ltd.), and the number of times of bending until a crack was generated in the card was measured. The number of times of bending of the card was measured in accordance with JIS X6305-1, and evaluation was made based on the number of times as follows:
Less than 1000 times: poor
1000 times or more but less than 3000 times: good
3000 times or more: very good

### <Transparency>

The transparency of the resin composition of each of Examples and Comparative Examples was evaluated as described below. A film having a thickness of 0.3 mm was formed using the resin composition to be measured. The Haze value thereof was measured using a Haze meter (HM-150 manufactured by Murakami Color Research Laboratory Co., Ltd.), and the transparency was evaluated as described below.
The Haze value was measured in accordance with JIS K 7136.
The Haze value was 5% or more: poor
The Haze value was 1% or more but less than 5%: good
The Haze value was less than 1%: very good

### <Blackness>

### Preparation of test piece

The film of each of Examples 4-7 and Comparative Examples 6-13, which will be described in detail later, was subjected to a laser marking process, and the blackness was evaluated as described below. Firstly, using the resin composition to be measured, a laser marking film having a thickness of 0.1 mm containing carbon black or a metal oxide was formed. Further, using the resin composition to be measured not containing carbon black and a metal oxide, a 0.1 mm overlay film was formed. Further, titanium oxide ("White DCF-T-17007" manufactured by Resino Color Industry Co., Ltd.) was added to the resin composition used for forming the overlay film so that the amount of titanium oxide in the whole resin composition became 15 wt%, and using this resin composition, a white core film having a thickness of 0.2 mm was formed.

Regarding the prepared films, the overlay film, the laser marking film and the white core film were layered in this order. The three-layer film to be measured was sandwiched between two laminated plates, in each of which a 0.5 mm SUS plate, a 1 mm silicone rubber sheet, a 100 µm SUS plate and a 0.78 mm Teflon (registered trademark) sheet were layered. Specifically, the film to be measured was sandwiched between the above-described two laminated plates so that the Teflon sheet of one of the laminated plates contacted with the overlay film side of the film to be measured and the Teflon sheet of the other laminated plate contacted with the white core film side of the film to be measured. Further, while the film to be measured was sandwiched between the two laminated plates, it was further sandwiched between a pair of pressing plates of a pressing machine from the side of the 0.5 mm SUS plate positioned at the outermost position of each of the two laminated plates, and using a pneumatic heating press (IMC-1839 type: manufactured by Imoto Machinery Co., Ltd.), it was pressed at 160°C and an air pressure of 0.2 MPa for 60 seconds, thereby preparing a laminate.

Using a laser marking apparatus ("EasyMarIV-E10" manufactured by Rofin-Baasel), laser marking was provided to the laminate obtained by pressing from the overlay film layer side under the below-described irradiation conditions. The printed portion was measured by a spectral density meter ("X-Rite504" manufactured by X-Rite Inc.), and the obtained maximum value was regarded as the blackness.

### Laser marking conditions

Scan Speed: 1,000 mm/s
Output Energy: 21 to 30A
Pulse Frequency: 10 to 100 kHz

### <Evaluation of laser color developing property>

In the judgment of laser color developing property, Examples or Comparative Examples in which the value of the blackness was 1.70 (threshold) or more were evaluated as "good", and Examples or Comparative Examples in which the value of the blackness was less than the threshold were evaluated as "poor". Note that Examples and Comparative Examples in which carbon black and a metal oxide were not contained and laser markability was not possessed were evaluated as "none" of laser color developing property.

### <Production of resin composition>

Each of the resin compositions in Examples 1-3 and Comparative Examples 1-5 was produced as described below. Specifically, to a resin represented by an abbreviation described below as shown in Table 1, polycaprolactone (poly(ε-caprolactone), weight average molecular weight: 10000) and a phosphazene flame retardant ("Rabitle (registered trademark) FP-110" manufactured by Fushimi Pharmaceutical Co., Ltd.) were added in amounts respectively shown in Table 1, thereby obtaining a homogeneous resin composition.

Each of the resin compositions in Examples 4-7 and Comparative Examples 6-13 were produced as described below. Specifically, to a resin represented by an abbreviation described below as shown in Table 1, polycaprolactone (poly(ε-caprolactone), weight average molecular weight: 10000), carbon black ("MONARCH (registered trademark) 800" manufactured by Cabot Corporation) and a metal oxide ("42-920A" manufactured by Tokan Material Technology Co., Ltd.) were added in amounts respectively shown in Table 1, and the mixture was stirred, thereby obtaining a homogeneous resin composition.

Further, to a resin shown in Table 1 below, polycaprolactone (Capa (registered trademark) 6800 manufactured by Perstorp, weight average molecular weight: 80,000) and the above-described carbon black were added in amounts respectively shown in Table 1, and the mixture was stirred, thereby producing the resin composition of Example 8.

Note that the above-described metal oxide ("42-920A") is a mixture of bismuth trioxide (Bi₂O₃) and neodymium trioxide (Nd₂O₃), and specifically, it is a mixture containing about 98 to 99% by mass of Bi₂O₃ and about 0.3 to 1.0% by mass of Nd₂O₃.

### (PC)

Bisphenol A-type aromatic polycarbonate resin
("Iupilon (registered trademark) E-2000" manufactured by Mitsubishi Engineering-Plastics Corporation, thermal deformation temperature (glass transition temperature): 150°C)

### (PETG)

Modified polyethylene telephthalate resin
("SKYGREEN (registered trademark) S2008" manufactured by SK Chemicals, thermal deformation temperature (glass transition temperature): 80°C)

### (PC/PETG alloy)

Mixture of the above-described (PC) and (PETG) at a weight ratio of 50:50

### <Production of test piece (sheet)>

Using each of the resin compositions in Examples 1-7 and Comparative Examples 1-13, a sheet for a test piece was produced as described below. Firstly, using a T-die melt extruder composed of a twin screw extruder with a barrel diameter of 32 mm and screw L/D=31.5, a sheet having a width of 300 mm was formed at a discharge rate of 20 kg/hour and at a screw rotation speed of 200 rpm. The cylinder/die head temperature was set at 280°C in Examples 1-7 and Comparative Examples 2, 4-9, 11 and 13, and at 260°C in Comparative Examples 1, 3, 10 and 12. As the sheet, a sheet in which both the surfaces are a mirror surface was produced. For the above-described evaluation of adhesiveness, durability and transparency, films with four thicknesses, i.e., 50 µm (0.05 mm), 100 µm (0.1 mm), 300 µm (0.3 mm) and 780 µm (0.78 mm), were formed using each of the resin compositions, and the above-described measurements were carried out.

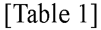

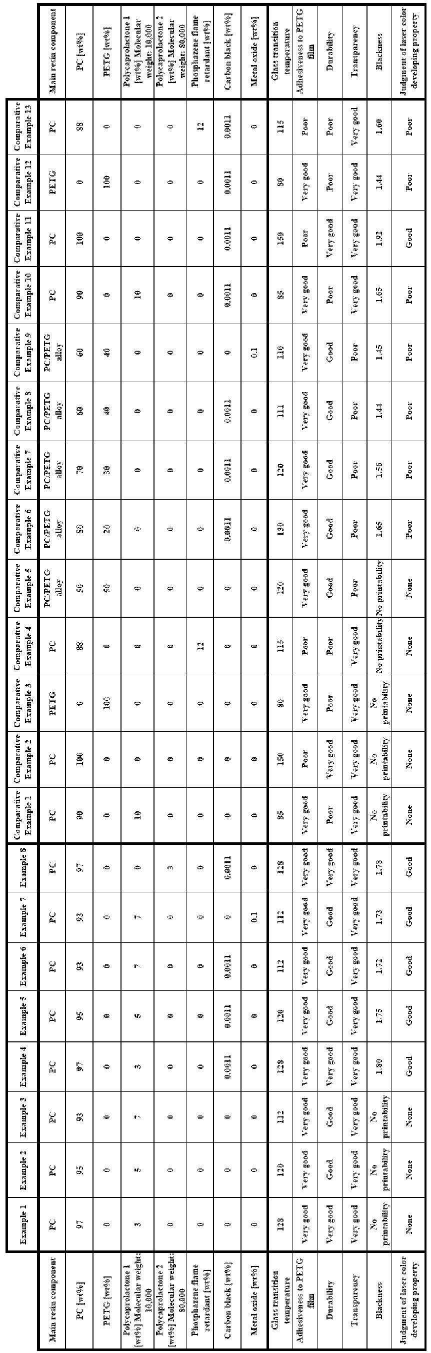

Examples 1-3 and 7 are reference examples and not part of the present invention.

### EXPLANATIONS OF LETTERS OR NUMERALS

- 10: ID card (multilayer sheet)
- 12: first surface layer
- 14: second surface layer
- 16: first laser marking layer
- 18: second laser marking layer
- 20: first core layer
- 22: second core layer
- 24: antenna chip

## Claims

1. A resin composition, which contains: 2% by mass or more but less than 9% by mass of an aliphatic polyester compound; and a polycarbonate resin,
wherein the resin composition has laser markability,
the resin composition further contains a laser color former comprising at least carbon black, and
the content of the carbon black is 1 to 100 mass ppm (0.0001 to 0.01% by mass) based on the mass of the whole resin composition.

2. The resin composition according to claim 1, which has a glass transition temperature of 100 to 135°C, measured as indicated in the specification.

3. The resin composition according to claim 1 or 2, wherein the aliphatic polyester compound comprises at least a lactone compound as a constituent monomer.

4. The resin composition according to claim 3, wherein the lactone compound comprises ε-polycaprolactone.

5. The resin composition according to claim 4, wherein the lactone compound comprises polycaprolactone whose main constituent monomer is ε-caprolactone.

6. The resin composition according to any one of claims 1 to 5, which contains the aliphatic polyester compound in an amount of 3% by mass or more but 5% by mass or less based on the mass of the whole resin composition.

7. The resin composition according to any one of claims 1 to 6, which contains the polycarbonate resin in an amount of 90% by mass or more based on the mass of the whole resin composition.

8. The resin composition according to any one of claims 1 to 7, which further contains a white pigment in an amount of 10 to 30% by mass based on the mass of the whole resin composition.

9. The resin composition according to claim 1, wherein the laser color former further comprises at least particles of a metal oxide.

10. The resin composition according to claim 9, wherein the metal oxide is represented by general formula (I):
Bi₍₁₋ₓ₎MₓO_{y} ... (I)
wherein: M is at least one metal selected from gadolinium and neodymium; x is a value satisfying 0.001<x<0.5; and y is a value satisfying 1<y<2.5.

11. The resin composition according to any one of claims 1 to 10, which contains the laser color former in an amount of 0.0001 to 0.2% by mass based on the mass of the resin composition.

12. A resin sheet for a card, which has a layer containing the resin composition according to any one of claims 1 to 11.

13. The resin sheet for a card according to claim 12, which has an embedded antenna chip.

14. The resin sheet for a card according to claim 12 or 13, which is for a laser marking card.

15. A multilayer sheet having two or more laminated resin sheets, wherein at least one layer contains the resin composition according to any one of claims 1 to 11.

16. The multilayer sheet according to claim 15, which further has a resin sheet containing one material selected from the group consisting of PET-G, polycarbonate, PCT-G, PCT and a mixture of at least two of them.

## Patentansprüche

1. Harzzusammensetzung, die enthält: 2 Massen-% oder mehr, aber weniger als 9 Massen-% einer aliphatischen Polyesterverbindung; und ein Polycarbonatharz,
worin die Harzzusammensetzung Lasermarkierbarkeit aufweist,
die Harzzusammensetzung ferner einen Laserfarbbildner enthält, der mindestens Ruß umfasst, und
der Gehalt des Rußes 1 bis 100 Massen-ppm (0,0001 bis 0,01 Massen-%), bezogen auf die Masse der gesamten Harzzusammensetzung, beträgt.

2. Harzzusammensetzung gemäß Anspruch 1, die eine Glasübergangstemperatur von 100 bis 135°C aufweist, gemessen wie in der Spezifikation angegeben.

3. Harzzusammensetzung gemäß Anspruch 1 oder 2, worin die aliphatische Polyesterverbindung mindestens eine Lactonverbindung als Monomerbestandteil enthält.

4. Harzzusammensetzung gemäß Anspruch 3, worin die Lactonverbindung ε-Polycaprolacton umfasst.

5. Harzzusammensetzung gemäß Anspruch 4, worin die Lactonverbindung Polycaprolacton umfasst, dessen Hauptmonomerbestandteil ε-Caprolacton ist.

6. Harzzusammensetzung gemäß einem der Ansprüche 1 bis 5, die die aliphatische Polyesterverbindung in einer Menge von 3 Massen-% oder mehr, aber 5 Massen-% oder weniger, bezogen auf die Masse der gesamten Harzzusammensetzung, enthält.

7. Harzzusammensetzung gemäß einem der Ansprüche 1 bis 6, die das Polycarbonatharz in einer Menge von 90 Massen-% oder mehr, bezogen auf die Masse der gesamten Harzzusammensetzung, enthält.

8. Harzzusammensetzung gemäß einem der Ansprüche 1 bis 7, die ferner ein weißes Pigment in einer Menge von 10 bis 30 Massen-%, bezogen auf die Masse der gesamten Harzzusammensetzung, enthält.

9. Harzzusammensetzung gemäß Anspruch 1, worin der Laserfarbbildner ferner mindestens Partikel eines Metalloxids enthält.

10. Harzzusammensetzung gemäß Anspruch 9, worin das Metalloxid durch die allgemeine Formel (I) dargestellt wird:
Bi₍₁₋ₓ₎MₓO_{y} (I)
worin: M mindestens ein Metall ausgewählt aus Gadolinium und Neodym ist; x ein Wert ist, der 0,001<x<0,5 genügt; und y ein Wert ist, der 1<y<2,5 genügt.

11. Harzzusammensetzung gemäß einem der Ansprüche 1 bis 10, die den Laserfarbbildner in einer Menge von 0,0001 bis 0,2 Massen-%, bezogen auf die Masse der Harzzusammensetzung, enthält.

12. Harzfolie für eine Karte, die eine Schicht aufweist, die die Harzzusammensetzung gemäß einem der Ansprüche 1 bis 11 enthält.

13. Harzfolie für eine Karte gemäß Anspruch 12, die einen eingebetteten Antennenchip aufweist.

14. Harzfolie für eine Karte gemäß Anspruch 12 oder 13, die für eine Lasermarkierungskarte bestimmt ist.

15. Mehrschichtige Folie mit zwei oder mehr laminierten Harzfolien, worin mindestens eine Schicht die Harzzusammensetzung gemäß einem der Ansprüche 1 bis 11 enthält.

16. Mehrschichtige Folie gemäß Anspruch 15, die ferner eine Harzfolie aufweist, die ein Material enthält, das aus der Gruppe bestehend aus PET-G, Polycarbonat, PCT-G, PCT und einer Mischung aus mindestens zwei dieser Materialien ausgewählt ist.

## Revendications

1. Composition de résine, qui contient : 2 % en masse ou plus mais moins de 9 % en masse d'un composé de polyester aliphatique ; et une résine de polycarbonate,
dans laquelle la composition de résine peut être marquée par laser,
la composition de résine contient en outre un formateur de couleur par laser comprenant au moins un noir de carbone, et
la teneur en noir de carbone est de 1 à 100 ppm en masse (0,0001 à 0,01% en masse) sur la base de la masse de la totalité de la composition de résine.

2. Composition de résine selon la revendication 1, qui présente une température de transition vitreuse de 100 à 135 °C, mesurée comme indiqué dans la description.

3. Composition de résine selon la revendication 1 ou 2, dans laquelle le composé de polyester aliphatique comprend au moins un composé de lactone en tant que monomère constitutif.

4. Composition de résine selon la revendication 3, dans laquelle le composé de lactone comprend une ε-polycaprolactone.

5. Composition de résine selon la revendication 4, dans laquelle le composé de lactone comprend une polycaprolactone dont le monomère constitutif principal est une ε-caprolactone.

6. Composition de résine selon l'une quelconque des revendications 1 à 5, qui contient le composé de polyester aliphatique en une quantité de 3 % en masse ou plus mais de 5 % en masse ou moins sur la base de la masse de la totalité de la composition de résine.

7. Composition de résine selon l'une quelconque des revendications 1 à 6, qui contient la résine de polycarbonate en une quantité de 90 % en masse ou plus sur la base de la masse de la totalité de la composition de résine.

8. Composition de résine selon l'une quelconque des revendications 1 à 7, qui contient en outre un pigment blanc en une quantité de 10 à 30 % en masse sur la base de la masse de la totalité de la composition de résine.

9. Composition de résine selon la revendication 1, dans laquelle le formateur de couleur par laser comprend en outre au moins des particules d'un oxyde métallique.

10. Composition de résine selon la revendication 9, dans laquelle l'oxyde métallique est représenté par la formule générale (I) :
Bi₍₁₋ₓ₎MₓO_{y} ... (I)
dans laquelle : M est au moins un métal sélectionné parmi le gadolinium et le néodyme ; x est une valeur satisfaisant 0,001 < x < 0,5 ; et y est une valeur satisfaisant 1 < y < 2,5.

11. Composition de résine selon l'une quelconque des revendications 1 à 10, qui contient le formateur de couleur par laser en une quantité de 0,0001 à 0,2 % en masse sur la base de la masse de la composition de résine.

12. Feuille de résine pour une carte, qui présente une couche contenant la composition de résine selon l'une quelconque des revendications 1 à 11.

13. Feuille de résine pour une carte selon la revendication 12, qui présente une puce d'antenne intégrée.

14. Feuille de résine pour une carte selon la revendication 12 ou 13, qui est destinée à une carte de marquage par laser.

15. Feuille multicouche présentant deux ou plus de deux feuilles de résine stratifiées, dans laquelle au moins une couche contient la composition de résine selon l'une quelconque des revendications 1 à 11.

16. Feuille multicouche selon la revendication 15, qui présente en outre une feuille de résine contenant un matériau sélectionné dans le groupe consistant en un PET-G, un polycarbonate, un PCT-G, un PCT et un mélange d'au moins deux de ceux-ci.
